(19) Europäisches Patentamt / European Patent Office / Office européen des brevets

(11) **EP 3 989 013 B1**

(12) **EUROPEAN PATENT SPECIFICATION**

(45) Date of publication and mention
of the grant of the patent:
**14.02.2024 Bulletin 2024/07**

(21) Application number: **20845051.0**

(22) Date of filing: **02.07.2020**

(51) International Patent Classification (IPC):
$G05B\ 13/02^{(2006.01)}$    $C21B\ 5/00^{(2006.01)}$
$G05B\ 17/02^{(2006.01)}$    $G05B\ 19/042^{(2006.01)}$
$C21B\ 7/24^{(2006.01)}$    $F27B\ 1/26^{(2006.01)}$
$F27D\ 19/00^{(2006.01)}$    $G05B\ 13/04^{(2006.01)}$

(52) Cooperative Patent Classification (CPC):
**G05B 13/048; C21B 5/006; C21B 7/24; F27B 1/26;
F27D 19/00; G05B 19/0426;** C21B 2300/04

(86) International application number:
**PCT/JP2020/026064**

(87) International publication number:
**WO 2021/014923 (28.01.2021 Gazette 2021/04)**

(54) **METHOD FOR CONTROLLING PROCESS, OPERATION GUIDANCE METHOD, METHOD FOR OPERATING BLAST FURNACE, METHOD FOR PRODUCING HOT METAL, AND DEVICE FOR CONTROLLING PROCESS**

VERFAHREN ZUR STEUERUNG EINES PROZESSES, BETRIEBSFÜHRUNGSVERFAHREN, VERFAHREN ZUM BETRIEB EINES HOCHOFENS, VERFAHREN ZUR HERSTELLUNG VON GESCHMOLZENEM METALL UND VORRICHTUNG ZUR STEUERUNG DES PROZESSES

PROCÉDÉ DE COMMANDE DE PROCESSUS, PROCÉDÉ DE GUIDAGE DE FONCTIONNEMENT, PROCÉDÉ DE FONCTIONNEMENT DE HAUT FOURNEAU, PROCÉDÉ DE FABRICATION DE METAL FONDU, ET DISPOSITIF DE COMMANDE DE PROCESSUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2019 JP 2019135531**

(43) Date of publication of application:
**27.04.2022 Bulletin 2022/17**

(73) Proprietor: **JFE Steel Corporation
Tokyo 100-0011 (JP)**

(72) Inventors:
• **HASHIMOTO, Yoshinari
Tokyo 100-0011 (JP)**
• **KAISE, Tatsuya
Tokyo 100-0011 (JP)**

(74) Representative: **Haseltine Lake Kempner LLP
Bürkleinstrasse 10
80538 München (DE)**

(56) References cited:
JP-A- 2000 129 319    JP-A- 2001 355 010
JP-A- 2010 204 784    JP-A- 2018 024 935
US-A1- 2005 154 477    US-A1- 2008 195 235

## Description

Field

The present invention relates to a method of controlling a process, an operation guidance method, a method of operating a blast furnace, a method of producing hot metal, and a control apparatus of a process. Background

In a blast furnace process in the steelmaking industry, hot metal temperature is an important control index. This hot metal temperature is controlled mainly by adjusting the reducing material ratio. In recent years, blast furnace operations have been conducted under low coke ratios and high pulverized coal ratios in order to rationalize raw material and fuel costs, so that furnace conditions tend to be destabilized. Therefore, there is a great need to reduce the variation of hot metal temperature.

In addition, the blast furnace process is characterized by a large heat capacity of the entire process and a long time constant of response to operations (actions) because the blast furnace process is operated in a state in which solids are charged. In addition, there is a dead time on the order of several hours before raw materials charged from the upper part of the blast furnace (furnace top) descend to the lower part of the blast furnace (furnace lower zone). Therefore, in order to control the hot metal temperature, it is essential to optimize the operation amounts of manipulated variables based on prediction of future furnace heat.

On this background, a prediction method of furnace heat using a physical model is proposed in Patent Literature 1. In the prediction method of furnace heat described in Patent Literature 1, the gas reduction rate parameter in the physical model is adjusted to match the composition of the current furnace top gas, and the furnace heat is predicted using the physical model after the parameter adjustment.

Patent Literature 2 discloses a method for controlling a non-linear process including the steps of first providing a controller that is operable to receive inputs representing measured variables of the process and predicting on an output of the controller predicted control values for manipulatible variables that control the process. A system is provided that models the actions of an operator of the process over an operating region of the process that represents a set of rules for actions to be taken by an operator upon the occurrence of predetermined conditions in the operation of the process. The operation of the controller is modified with the system when one of the predetermined conditions exists.

Patent Literature 3 discloses a method for controlling and optimizing the operation of a process having a plurality of independently controlled, manipulated variables and at least one controlled variable dependent on the manipulated variables. The method inputs specified constraints for a linear program optimizer to target, calculates a set of objective function coefficients based on the inputted specified constraints, and generates a plurality of combinations of manipulated and controlled variables. The method also tests each generated combination for changed values that cause the linear program optimizer to target different constraints than the inputted specified constraints, and adjusts the calculated set of objective function coefficients so that the linear program optimizer targets the specified constraints.

Citation List

Patent Literature

Patent Literature 1: Japanese Patent Application Laid-open No. 11-335710
Patent Literature 2: U.S. Patent Application Publication No. 2005 / 0154477 A1
Patent Literature 3: U.S. Patent Application Publication No. 2008 / 0195235 A1

Summary

Technical Problem

In the blast furnace process, the production rate of pig iron (hereinafter referred to as the "pig iron producing speed") is required to be kept at or near the target value, but the pig iron producing speed also varies when the reducing material ratio is changed to control the hot metal temperature. For example, when a pulverized coal ratio is increased, oxygen blown from a tuyere is consumed by the combustion of pulverized coal, so that the burning velocity of coke is decreased, and thus the descending velocity of raw materials and pig iron producing speed are decreased. A conventional method of controlling such a process therefore has the problem that controlling the hot metal temperature while keeping the pig iron producing speed at or near a target value is difficult.

The present invention has been made in consideration of the above, and an object of the present invention is to provide a method of controlling a process, an operation guidance method, a method of operating a blast furnace, a method of producing hot metal, and a control apparatus of a process that can keep the control amount of a specific control variable at a predetermined value and control the control amount of another control variable. Solution to Problem

In order to solve the above-described problem and achieve the object, a method of controlling a process according to the present invention including a plurality of manipulated variables and a plurality of control variables controlled by the manipulated variables, control amounts of the control variables being determined by mutual interference of operation amounts of the manipulated variables, includes: a free response calculating step of calculating free responses that are responses of the control variables during a predetermined period from a current time in a case where the operation amounts of manipulated variables are constant for the predetermined period; a first response calculating step of calculating first responses that are responses of the control variables during the predetermined period, in a case where an operation amount of a first manipulated variable among the manipulated variables is changed in step during the predetermined period and the operation amounts of the other manipulated variables among the manipulated variables are constant for the predetermined period; a second response calculating step of calculating second responses that are responses of the control variables during the predetermined period, in a case where an operation amount of a second manipulated variable other than the first manipulated variable among the manipulated variables is changed in step simultaneously with the operation amount of the first manipulated variable during the predetermined period; and an operation amount determining step of determining the operation amounts of the manipulated variables such that the control amounts of the control variables become predetermined target values based on the free responses, the first responses, and the second responses.

Moreover, in the above-described method of controlling a process according to the present invention, the second manipulated variable is a manipulated variable an operation amount of which is able to be determined such that a control amount of a specific control variable among the control variables is not changed in a case where the second manipulated variable is changed in step simultaneously with the operation amount of the first manipulated variable.

Moreover, in the above-described method of controlling a process according to the present invention, the operation amount determining step includes: a step of calculating future transitions of the control amounts of the control variables in a case where an operation of linear sum of the change amount in the operation amounts at the first response calculating step and the change amount in the operation amounts at the second response calculating step is performed; and a step of calculating weights of operation amounts of the manipulated variables that minimize deviation between the calculated future transitions of the control amounts of the control variables and the predetermined target values, and calculating operation amounts of the manipulated variables based on the calculated weights.

Moreover, in the above-described method of controlling a process according to the present invention, the free response calculating step, the first response calculating step, the second response calculating step, and the operation amount determining step are repeatedly executed.

Moreover, in the above-described method of controlling a process according to the present invention, the process is a blast furnace process, the manipulated variables include at least one of a coke ratio, a blast volume, an enrichment oxygen flow rate, a blast temperature, a pulverized coal flow rate, a blast moisture, and a furnace top pressure, and the control variables are a hot metal temperature and a pig iron producing speed.

In order to solve the above-described problem and achieve the object, an operation guidance method according to the present invention includes a step of assisting blast furnace operation by presenting operation amounts of manipulated variables determined by the method of controlling a process.

In order to solve the above-described problem and achieve the object, a method of operating a blast furnace according to the present invention includes a step of controlling the blast furnace in accordance with operation amounts of manipulated variables determined by the method of controlling a process.

In order to solve the above-described problem and achieve the object, a method of producing hot metal according to the present invention includes a step of producing hot metal by controlling a blast furnace in accordance with operation amounts of manipulated variables determined by the method of controlling a process.

In order to solve the above-described problem and achieve the object, a control apparatus of a process according to the present invention including a plurality of manipulated variables and a plurality of control variables controlled by the manipulated variables, control amounts of the control variables being determined by mutual interference of operation amounts of the manipulated variables, includes: a free response calculating unit configured to calculate free responses that are responses of the control variables during a predetermined period from a current time in a case where the operation amounts of manipulated variables are constant for the predetermined period; a first response calculating unit configured to calculate first responses that are responses of the control variables during the predetermined period, in a case where an operation amount of a first manipulated variable among the manipulated variables is changed in step during the predetermined period and the operation amounts of the other manipulated variables among the manipulated variables are constant for the predetermined period; a second response calculating unit configured to calculate second responses that are responses of the control variables during the predetermined period, in a case where an operation amount of a second manipulated variable other than the first manipulated variable among the manipulated variables is changed in step simultaneously with the operation amount of the first manipulated variable during the predetermined period; and an operation amount determining unit configured to determine the operation amounts of the manipulated variables such that the control amounts of the control variables become predetermined target values based on the free responses, the first responses, and the second responses.

Advantageous Effects of Invention

With the method of controlling a process, the operation guidance method, the method of operating a blast furnace, the method of producing hot metal, and the control apparatus of a process according to the present invention, the free responses of the control variables and the responses of the control variables when one or two manipulated variables are changed in step are obtained in advance. Furthermore, by determining the operation amount of the manipulated variable based on these responses, the control amount of the specific control variable can be kept at a predetermined value and the control amount of the other control variable can be controlled.

Brief Description of Drawings

FIG. 1 is a block diagram illustrating a schematic configuration of a control apparatus of a process according to an embodiment of the present invention.
FIG. 2 is a diagram illustrating input and output variables of a physical model used in a method of controlling a process according to the embodiment of the present invention.
FIG. 3 is a diagram illustrating calculation results of predicted transitions of control variables (hot metal temperature and pig iron producing speed) when an operation $\Delta U_1$ is executed in the method of controlling a process according to the embodiment of the present invention.
FIG. 4 is a diagram illustrating change in operation amounts of manipulated variables (pulverized coal amount, blast volume, pulverized coal flow rate, and enrichment oxygen flow rate) when the operation $\Delta U_1$ is executed in the method of controlling a process according to the embodiment of the present invention.
FIG. 5 is a diagram illustrating calculation results of step responses of the control variables (hot metal temperature and pig iron producing speed) when the operation $\Delta U_1$ is executed in the method of controlling a process according to the embodiment of the present invention.
FIG. 6 is a diagram illustrating calculation results of the predicted transitions of the control variables (hot metal temperature and pig iron producing speed) when an operation $\Delta U_2$ is executed in the method of controlling a process according to the embodiment of the present invention.
FIG. 7 is a diagram illustrating change in operation amounts of the manipulated variables (pulverized coal amount, blast volume, pulverized coal flow rate, and enrichment oxygen flow rate) when the operation $\Delta U_2$ is executed in the method of controlling a process according to the embodiment of the present invention.
FIG. 8 is a diagram illustrating calculation results of step responses of the control variables (hot metal temperature and pig iron producing speed) when the operation $\Delta U_2$ is executed in the method of controlling a process according to the embodiment of the present invention.
FIG. 9 is a diagram illustrating change in operation amounts of the manipulated variables (blast volume, enrichment oxygen flow rate, pulverized coal flow rate, blast moisture, blast temperature, and coke ratio) when a control action is executed based on determined operation amounts of the manipulated variables in the method of controlling a process according to the embodiment of the present invention.
FIG. 10 is a diagram illustrating calculation results of predicted transitions of the control variables (hot metal temperature and pig iron producing speed) when the control action is executed based on the determined operation amounts of the manipulated variables in the method of controlling a process according to the embodiment of the present invention.

Description of Embodiments

A method of controlling a process, an operation guidance method, a method of operating a blast furnace, a method of producing hot metal, and a control apparatus of a process according to an embodiment of the present invention will be explained with reference to the drawings.

<Configuration of control apparatus of process>

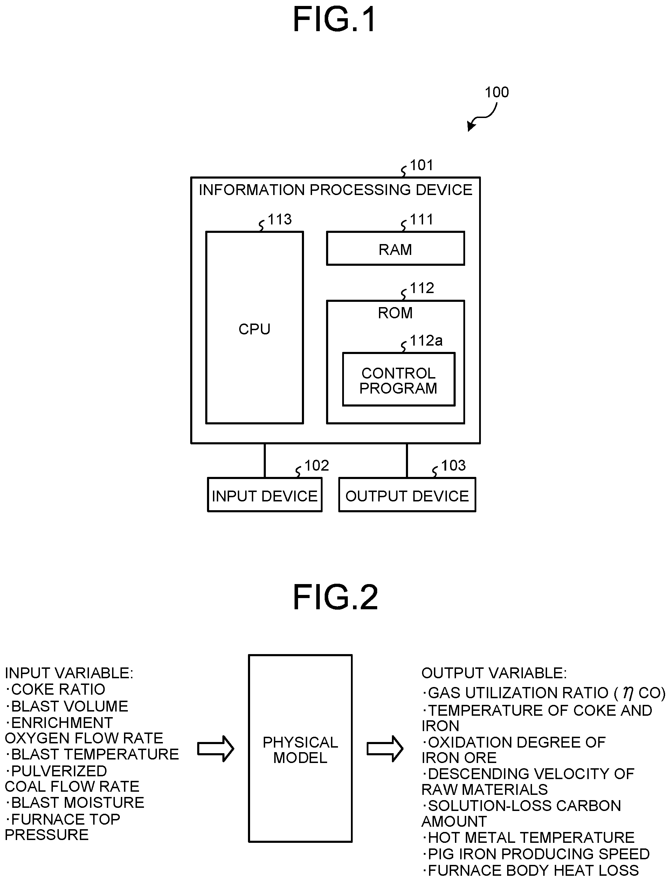

First, a configuration of a control apparatus of a process (hereinafter referred to as "control apparatus") will be explained with reference to FIG. 1. A control apparatus 100 includes an information processing device 101, an input device 102, and an output device 103.

The information processing device 101 includes a general-purpose device such as a personal computer or a workstation, and includes a random access memory (RAM) 111, a read-only memory (ROM) 112, and a central processing unit (CPU) 113. The RAM 111 temporarily stores processing programs and processing data related to the processing executed by the CPU 113, and functions as a working area for the CPU 113.

The ROM 112 stores a control program 112a for executing the method of controlling a process according to the embodiment of the present invention, and a processing program and processing data for controlling the entire operation of the information processing device 101.

The CPU 113 controls the entire operation of the information processing device 101 in accordance with the control program 112a and the processing program stored in the ROM 112. The CPU 113 functions as a free response calculating unit, a first response calculating unit, a second response calculating unit, and an operation amount determining unit in the method of controlling a process described later. The free response calculating unit performs a free response calculating step, the first response calculating unit performs a first response calculating step, the second response calculating unit performs a second response calculating step, and the operation amount determining unit performs an operation amount determining step.

The input device 102 includes a device such as a keyboard, a mouse pointer, or a numeric keypad, and is operated when various information is input to the information processing device 101. The output device 103 includes a device such as a display or a printer, and outputs various processing information of the information processing device 101.

<Configuration of physical model>

Next, the physical model used in the method of controlling a process according to the embodiment of the present invention will be explained. The physical model used in the present invention is the same as the method described in Reference 1 (Michiharu HATANO et al., "Investigation of Blow-in Operation through the Blast Furnace Dynamic Model", Tetsu-to-Hagane, vol. 68, p. 2369). The physical model used in the present invention consists of a set of partial differential equations that take into account physical phenomena such as reduction of iron ore, heat exchange between iron ore and coke, and melting of iron ore. The physical model used in the present invention is a physical model that can calculate variables (output variables) that indicate the state in the blast furnace in dynamic conditions (hereinafter referred to as "dynamic model").

As illustrated in FIG. 2, the main time-varying boundary conditions (input variables, and manipulated variables of a blast furnace (also called operation factors)) that are given to this dynamic model are as follows.

(1) Coke ratio at the furnace top (CR) [kg/t]: Amount of coke input per ton of hot metal
(2) Blast volume (BV) [$Nm^3$/min]: Flow rate of air blown into the blast furnace
(3) Enrichment oxygen flow rate (BVO) [$Nm^3$/min]: Flow rate of enrichment oxygen blown into the blast furnace
(4) Blast temperature (BT) [°C]: Temperature of the air blown into the blast furnace
(5) Pulverized coal flow rate (Pulverized coal injection rate, PCI) [kg/min]: Weight of pulverized coal used per ton of produced hot metal
(6) Blast moisture (BM) [g/$Nm^3$]: Humidity of the air blown into the blast furnace
(7) Furnace top pressure [Pa]: Pressure at the furnace top of the blast furnace

The main output variables formed by the dynamic model are as follows.

(1) Gas utilization ratio in the furnace ($\eta$CO): $CO_2$/(CO + $CO_2$)
(2) Temperature of coke and iron
(3) Oxidation degree of iron ore
(4) Descending velocity of raw materials
(5) Amount of solution-loss carbon (solution-loss carbon amount)
(6) Hot metal temperature
(7) Pig iron producing speed (hot metal production speed)
(8) Furnace body heat loss: The amount of heat taken by cooling water when a furnace body is cooled by the cooling water

In the present invention, the time step (time interval) for calculating the output variables was 30 minutes. Note that the time step is variable depending on the purpose and is not limited to the values in the present embodiment. In the present invention, the dynamic model described above is used to calculate the output variables including a hot metal temperature and a pig iron producing speed that change from time to time.

<Method of controlling process>

Next, the method of controlling a process according to the present embodiment using the dynamic model described above will be explained. The method of controlling a process according to the present embodiment is applied to a process of an interference system that includes a plurality of manipulated variables and a plurality of control variables controlled by the manipulated variables, control amounts of the control variables being determined by mutual interference of operation amounts of the manipulated variables. In the following description, a method of controlling the blast furnace process will be explained as an example of a process. The dynamic model described above can be represented, for example, as in Equations (1) and (2) described below.

$$x(t+1) = f(x(t), u(t)) \qquad (1)$$

$$y(t) = C(x(t)) \qquad (2)$$

In Equations (1) and (2) described above, $x(t)$ is the state variable calculated in the dynamic model (temperature of coke and iron, oxidation degree of iron ore, descending velocity of raw materials, etc.), and $y(t)$ is the control variables, that are, hot metal temperature and pig iron producing speed. C is a matrix or function for extracting the control variables from the state variables calculated in the dynamic model.

The $u(t)$ in Equation (1) described above is an input variable of the physical model, such as blast volume, enrichment oxygen flow rate, pulverized coal flow rate, blast moisture, blast temperature, and coke ratio. This $u(t)$ can be expressed by "$u(t) = (BV(t), BVO(t), PCI(t), BM(t), BT(t), CR(t))$".

In the present embodiment, pulverized coal flow rate (PCI) [kg/min] and blast volume (BV) [$Nm^3$/min] are used as the manipulated variables. Instead of the pulverized coal flow rate, the blast moisture or the coke ratio can be used. The present embodiment assumes that when the blast volume is changed, the enrichment oxygen flow rate is also changed proportionally (i.e., the oxygen enrichment ratio is constant).

(Free response calculating step)

First, the current operation amounts of all the manipulated variables are assumed to be kept constant, and predictive calculation of a hot metal temperature and a pig iron producing speed in future is performed. In other words, this step calculates responses of the control variables during a predetermined period from a current time when the operation amounts of manipulated variables are constant for the predetermined period. Specifically, this step assumes that the current time step is t = 0 and calculates the responses of the hot metal temperature and the pig iron producing speed in future using Equations (3) and (4) described below. Each of the responses $y_0$ of the control variables (hot metal temperature and pig iron producing speed) obtained in this manner is referred to as the "free response" in the present embodiment.

$$x(t+1) = f(x(t), u(0)) \qquad (3)$$

$$y_0(t) = C(x(t)) \qquad (4)$$

(First response calculating step)

Then, the responses of the control variables during the predetermined period is calculated when the operation amount (action amount) of a specific manipulated variable (first manipulated variable) among the manipulated variables is changed in step during the predetermined period. At this step, specifically, the responses (first responses) $y_1$ of the control variables when the pulverized coal flow rate is increased by a unit amount (e.g., 50 kg/min) while the operation amounts of the other manipulated variables are not changed are calculated using Equations (5) and (6) described below.

$$x(t+1) = f(x(t), u(0) + \Delta u_1) \qquad (5)$$

$$y_1(t) = C(x(t)) \qquad (6)$$

The operation amount of the manipulated variable here, when converted in terms of the pulverized coal amount per blast volume $BV_{tot}$ (defined as "$PCI/BV_{tot}$") (the blast volume including blast equivalent to enrichment oxygen: calculated as "$BV + 100/21 \times BVO$"), is "0.0064 [kg/Nm$^3$]". If a change amount in the operation amounts of the manipulated variables is expressed as "$\Delta U = (\Delta PCI/BV_{tot}, \Delta BV, \Delta BVO)^T$", this operation is "$\Delta U_1 = (0.0064, 0, 0)^T$". The difference of the input variables in the dynamic model is "$\Delta u_1 = (0, 0, 50, 0, 0, 0)^T$".

Here, the manipulated variable "$\Delta PCI/BV_{tot}$" described above was introduced for the following reason. The hot metal temperature is affected by the pulverized coal ratio [kg/t] that is the heat source per ton of hot metal. The basic unit of blast volume per ton of hot metal [Nm$^3$/t] is almost constant (e.g., about 1000 to 1200 Nm$^3$/t) for any blast furnace. Thus, the pulverized coal amount per blast volume [kg/Nm$^3$], rather than the pulverized coal flow rate [kg/min], has an almost proportional relationship with the pulverized coal ratio and is considered to be more appropriate as a manipulated variable.

Then, by taking the difference between the response $y_1$ and the free response $y_0$ of the corresponding control variable obtained as described above, the influence of changing the pulverized coal flow rate on the pig iron producing speed is isolated. Accordingly, the step responses $S_1(t)$ of the control variables to the pulverized coal flow rate are calculated.

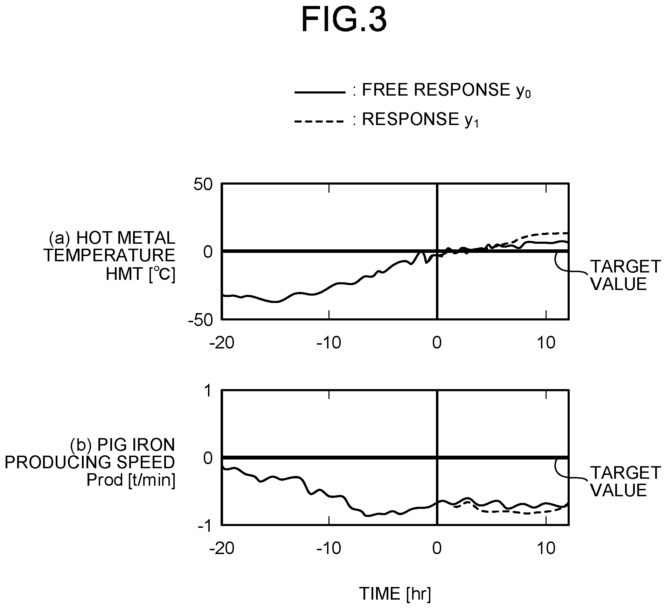

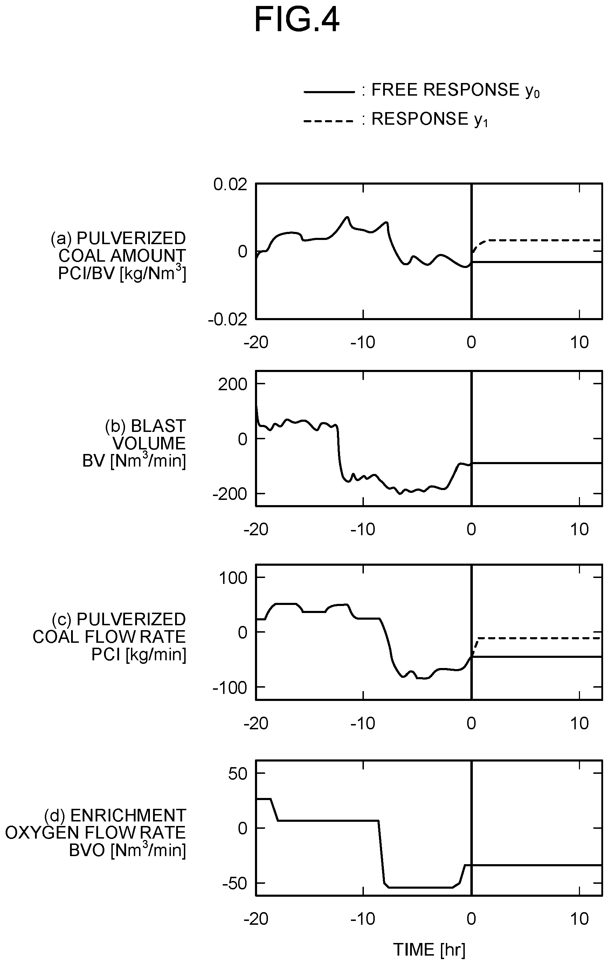

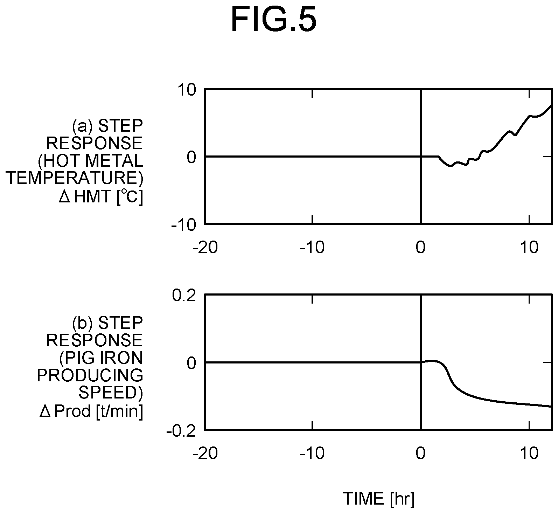

FIG. 3 illustrates the calculated results of the predicted transitions of the control variables (hot metal temperature and pig iron producing speed) when the operation $\Delta U_1$ described above is executed. In FIG. 3, the vertical axis represents a difference from the target value, the horizontal axis represents time, the solid line represents the free response $y_0$, and the dashed line represents the response $y_1$. FIG. 4 illustrates the change in the operation amounts of the manipulated variables (pulverized coal amount, blast volume, pulverized coal flow rate, and enrichment oxygen flow rate) when the operation $\Delta U_1$ described above is executed. FIG. 5 illustrates the calculation results of the step responses $S_1(t)$ of the control variables (hot metal temperature and pig iron producing speed) when the operation $\Delta U_1$ described above is executed.

(Second response calculating step)

Then, the responses of the control variables during the predetermined period is calculated when the operation amount of the second manipulated variable other than the first manipulated variable among the manipulated variables is changed in step simultaneously with the operation amount of the first manipulated variable during the predetermined period. At this step, specifically, the responses of the control variables (second responses) $y_2$ when the pulverized coal flow rate (first manipulated variable) and the blast volume (second manipulated variable) are changed simultaneously and proportionally are calculated using Equations (7) and (8) described below.

$$x(t+1) = f\left(x(t), u(0) + \Delta u_2\right) \tag{7}$$

$$y_2(t) = C\left(x(t)\right) \tag{8}$$

Here, the second manipulated variable is not limited to the blast volume. Two or more manipulated variables may be changed simultaneously in a predetermined ratio (e.g., combination of blast volume and enrichment oxygen amount). Note that the second manipulated variable is a manipulated variable an operation amount of which is able to be determined such that a control amount of a specific control variable (e.g., hot metal temperature) among the control variables is not changed when the second manipulated variable is changed in step simultaneously with the operation amount of the first manipulated variable. Then, the operation amount of the second manipulated variable is set to have a predetermined ratio to the operation amount of the first manipulated variable such that the specific control amount is not changed by the first manipulated variable. The term "not changed" here does not mean that it is always constant, but rather that it does not change on average (e.g., on the order of five hours or more), although it may vary slightly over time. The following will describe an example of changing only the pig iron producing speed without affecting the hot metal temperature.

When a change amount in the operation amounts of the manipulated variables is expressed by "$\Delta U = (\Delta PCI/BV_{tot}, \Delta BV, \Delta BVO)^T$", this operation can be defined as, for example, "$\Delta U_2 = (0, 200, 20)^T$". At this time, the difference of the input variables in the dynamic model is "$\Delta u_2 = (200, 20, 50, 0, 0, 0)^T$". This is the change amount of the operation amount that changes the blast volume with a constant oxygen enrichment ratio and changes the operation amount of the pulverized coal flow rate so that the pulverized coal ratio does not change accordingly.

Then, by taking the difference between the response $y_2$ and the free response $y_0$ of the corresponding control variable obtained as described above, the influence of changing the blast volume and pulverized coal flow rate on the pig iron producing speed is isolated. Accordingly, the step responses $S_2(t)$ of the control variables to the blast volume and pulverized coal flow rate are calculated.

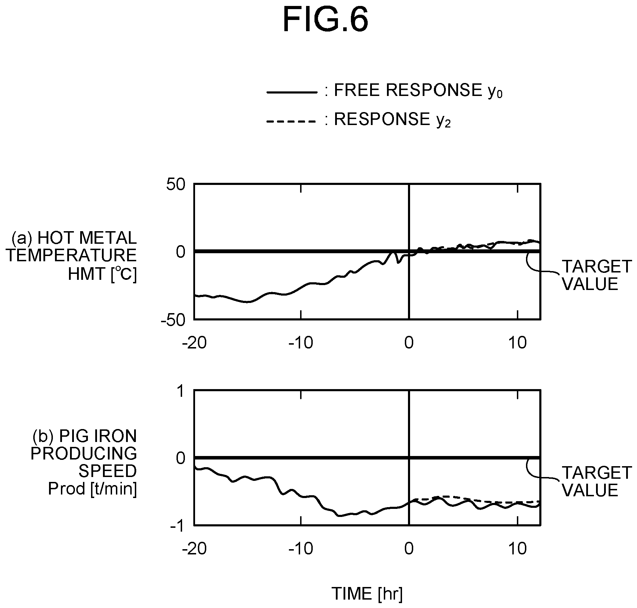

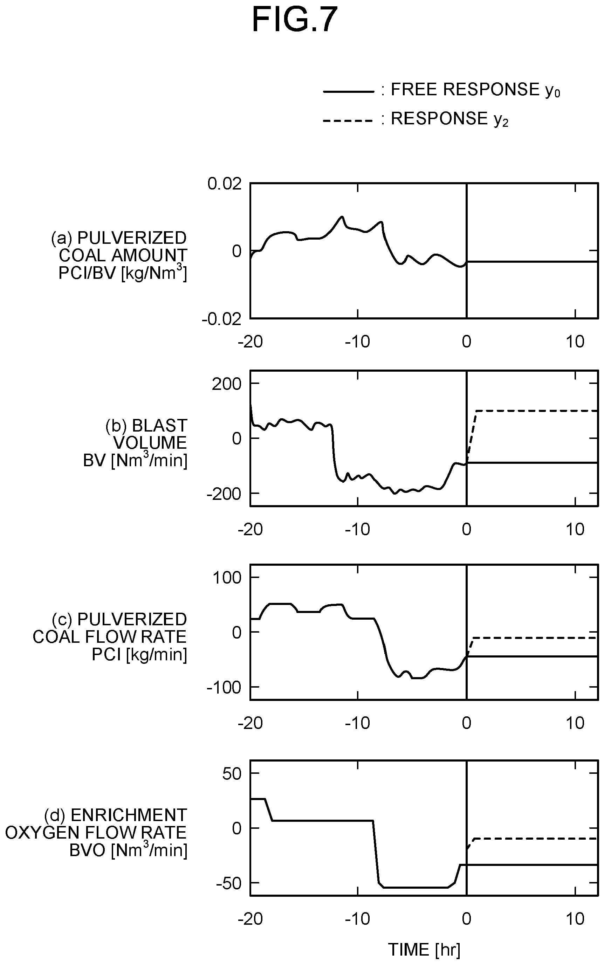

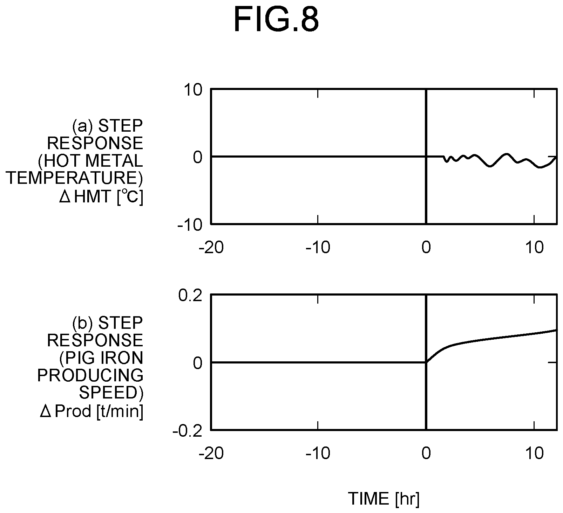

FIG. 6 illustrates the calculated results of the predicted transitions of the control variables (hot metal temperature and pig iron producing speed) when the operation $\Delta U_2$ described above is executed. In FIG. 6, the vertical axis represents a difference from the target value, the horizontal axis represents time, the solid line represents the free response $y_0$, and the dashed line represents the response $y_2$. FIG. 7 illustrates the change in the operation amounts of the manipulated variables (pulverized coal amount, blast volume, pulverized coal flow rate, and enrichment oxygen flow rate) when the operation $\Delta U_2$ described above is executed. FIG. 8 illustrates the calculation results of the step responses $S_2(t)$ of the control variables (hot metal temperature and pig iron producing speed) when the operation $\Delta U_2$ described above is executed.

In general model predictive control, the response of a control variable when the operation amount of a single manipulated variable is changed is often calculated as a step response. On the other hand, as described above, the present embodiment calculates the step responses $S_1(t)$ and $S_2(t)$ when the three manipulated variables (input variables) of the pulverized coal flow rate, the blast volume, and the enrichment oxygen flow rate are shifted simultaneously. The reason for this is as follows.

In the blast furnace process, when only the pig iron producing speed is adjusted, the pulverized coal flow rate [kg/min] is increased in proportion to the blast volume [Nm$^3$/min]. Accordingly, the pulverized coal ratio [kg/t] can be kept almost constant, and only the pig iron producing speed can be adjusted without affecting the hot metal temperature. In the calculation results illustrated in FIG. 8 (a) and (b), the pig iron producing speed changes in step, but the hot metal temperature is almost unchanged. Taking into account such an operation mode, the present embodiment obtains the step responses $S_1(t)$ and $S_2(t)$ when a typical operation is performed as described above.

(Operation amount determining step)

Then, the following explains a method of determining the operation amounts of the manipulated variables based on the free responses $y_0$ and the responses $y_1$ and $y_2$ calculated at the steps described above such that the control amounts of the control variables become the predetermined target values. The basic idea of the method of determining the operation amounts of the manipulated variables is the same as that of the model predictive control. The future deviations of the control variables are predicted, and the variation amount of the manipulated variables to cancel the deviations are obtained. In the present embodiment, Equation (9) described below is used to approximate the future transitions of the control amounts of the control variables when the linear sum of the operations $\Delta U_1$ and $\Delta U_2$ ($w_1 \times \Delta U_1 + w_2 \times \Delta U_2$) is performed. As described above, $\Delta U_1 = (0.0064, 0, 0)^T$ and $\Delta U_2 = (0, 200, 20)^T$.

$$y(t) = y_0(t) + w_1 \times S_1(t) + w_2 \times S_2(t) \tag{9}$$

Next, weights $w_1$ and $w_2$ of the operation amounts that minimize the deviations between the future transitions of the control amounts of the control variables represented in Equation (9) described above and the target values of the control amounts of the control variables are calculated using Equation (10) described below. In the present embodiment, "$w_1 = -0.84$ and $w_2 = 1.36$" were obtained.

$$\text{Min}\,(w_1, w_2) \sum (t = 1 \sim 20)(y(t) - y_{ref})^2 \tag{10}$$

Furthermore, the actual manipulated variables are the pulverized coal flow rate and the blast volume. Therefore, in order to obtain the change amount thereof, the variation amounts of the pulverized coal amount per blast volume ($\Delta PCI/BV_{tot}$), the blast volume (BV), and the enrichment oxygen flow rate (BVO) are obtained based on the weights $w_1$ and $w_2$ described above, as represented in Equation (11) described below. In the present embodiment, "$\Delta PCI/BV_{tot} = -0.0054$ [kg/Nm$^3$], $\Delta BV = 272$ [Nm$^3$/min] , and $\Delta BVO = 27$ [Nm$^3$/min] were obtained.

$$(\Delta PCI / BV_{tot}, \Delta BV, \Delta BVO) = \Delta U_1 \times w_1 + \Delta U_2 \times w_2 \tag{11}$$

Next, Equation (12) described blow is used to determine the operation amount of the pulverized coal flow rate ($\Delta PCI$) that can be directly operated by the operator. The subscript "0" in Equation (12) described below means that it is the current value. In the present embodiment, "$\Delta PCI = 35$ kg/min" was obtained.

$$\Delta \mathrm{PCI} = \left[\mathrm{BV}_0 + \Delta \mathrm{BV} + 100/21 \times (\mathrm{BVO}_0 + \Delta \mathrm{BVO})\right] \times (\mathrm{PCI}/\mathrm{BV}_{tot0} + \Delta \mathrm{PCI}/\mathrm{BV}) - \mathrm{PCI}_0$$
(12)

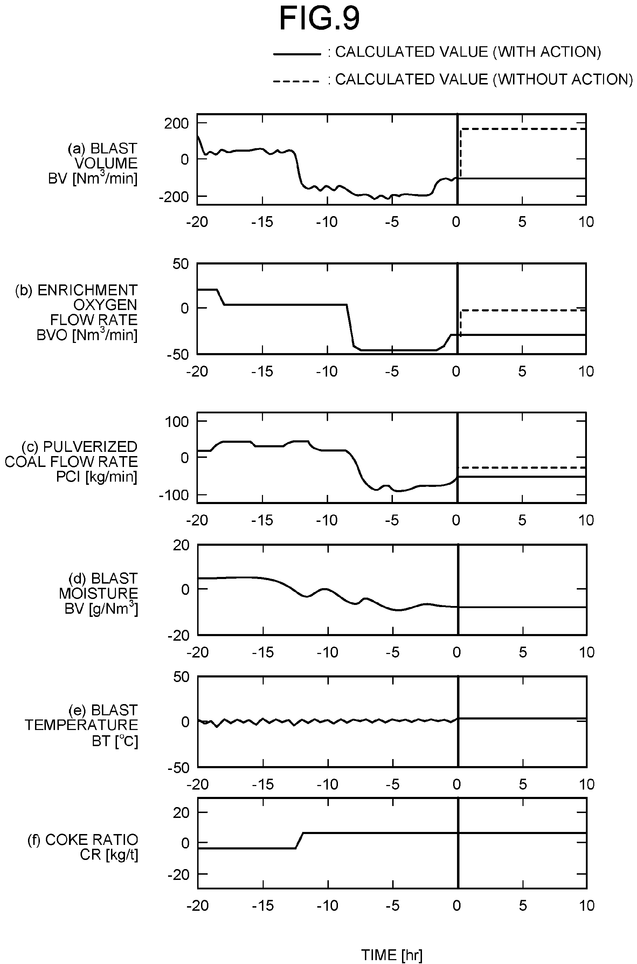

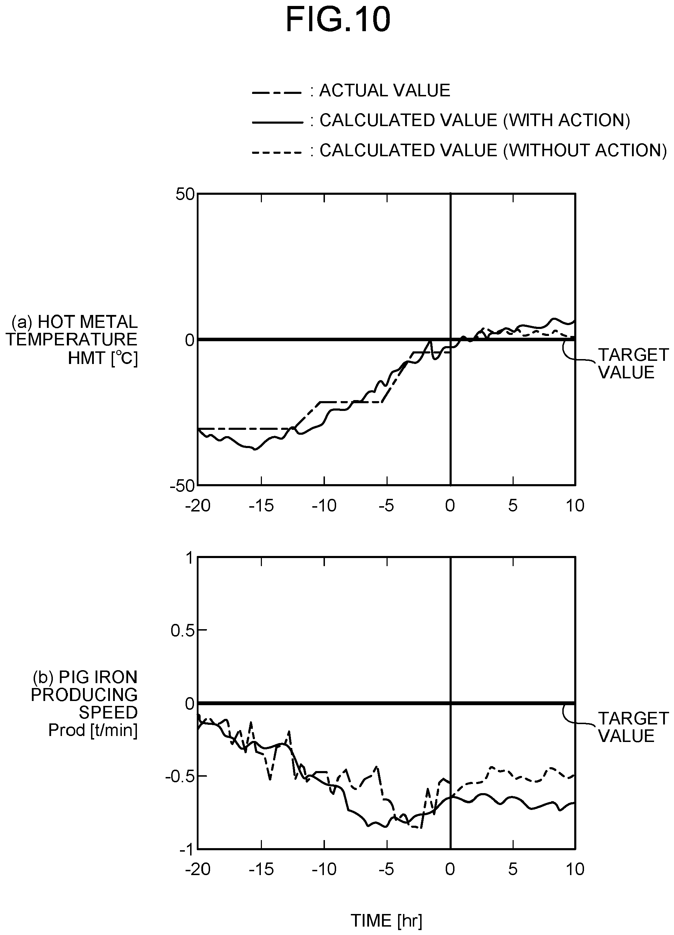

FIG. 9 illustrates the change in the operation amount of each manipulated variable (blast volume, enrichment oxygen flow rate, pulverized coal flow rate, blast moisture, blast temperature, and coke ratio) calculated by Equation (12) described above. FIG. 10 is a diagram illustrating calculation results of predicted transitions of the control variables (hot metal temperature and pig iron producing speed) when the control action is executed based on the operation amounts of the manipulated variables determined by Equation (12) described above. In FIG. 9 and FIG. 10, the calculated values when no operation (action) is performed are represented with solid lines, and the calculated values when an operation (action) is performed are represented with dashed lines. In FIG. 10 the actual values are represented with single-dotted lines. As illustrated in FIG. 9 and FIG. 10, with the present embodiment, an appropriate control action to compensate for the deviation from the target value can be determined.

In the method of controlling a process according to the present embodiment, it is desirable to repeatedly execute the free response calculating step, the first response calculating step, the second response calculating step, and the operation amount determining step described above. The repetition of the steps described above may be performed in a regular cycle or in an irregular cycle.

<Operation guidance method>

It is also possible to apply the method of controlling a process according to the present embodiment to an operation guidance method. In this case, in addition to the free response calculating step, the first response calculating step, the second response calculating step, and the operation amount determining step described above, a step of assisting blast furnace operation is performed. This step assists the blast furnace operation by presenting the operation amounts of the manipulated variables determined at the operation amount determining step to the operator, for example, through the output device 103.

<Method of operating blast furnace>

It is also possible to apply the method of controlling a process according to the present embodiment to a method of operating a blast furnace. In this case, in addition to the free response calculating step, the first response calculating step, the second response calculating step, and the operation amount determining step described above, a step of controlling blast furnace in accordance with the operation amounts of the manipulated variables determined at the operation amount determining step is performed.

<Method of producing hot metal>

It is also possible to apply the method of controlling a process according to the present embodiment to a method of producing hot metal. In this case, in addition to the free response calculating step, the first response calculating step, the second response calculating step, and the operation amount determining step described above, a step of producing hot metal by controlling blast furnace in accordance with the operation amounts of the manipulated variables determined at the operation amount determining step is performed.

With the method of controlling a process, the operation guidance method, the method of operating a blast furnace, the method of producing hot metal, and the control apparatus of a process according to the present embodiment as explained above, the free responses of the control variables and the responses of the control variables when one or two manipulated variables are changed in step are obtained in advance. Furthermore, by determining the operation amount of the manipulated variable based on these responses, the control amount of the specific control variable can be kept at a predetermined value and the control amount of the other control variable can be controlled.

In other words, the method of controlling a process, the operation guidance method, the method of operating a blast furnace, the method of producing hot metal, and the control apparatus of a process according to the present embodiment can control the hot metal temperature while keeping the pig iron producing speed at or near the target value. Furthermore, the method of controlling a process, the operation guidance method, the method of operating a blast furnace, the method of producing hot metal, and the control apparatus of a process according to the present embodiment can control the pig iron producing speed while controlling the hot metal temperature to a constant level. Accordingly, a highly efficient and stable blast furnace process can be implemented.

Reference Signs List

| | |
|---|---|
| 100 | control apparatus |
| 101 | information processing device |
| 102 | input device |
| 103 | output device |
| 111 | RAM |
| 112 | ROM |
| 112A | control program |
| 113 | CPU |

**Claims**

1. A method of controlling a process including a plurality of manipulated variables and a plurality of control variables controlled by the manipulated variables, control amounts of the control variables being determined by mutual interference of operation amounts of the manipulated variables, the method comprising:

   a free response calculating step of calculating free responses that are responses of the control variables during a predetermined period from a current time in a case where the operation amounts of manipulated variables are constant for the predetermined period;
   a first response calculating step of calculating first responses that are responses of the control variables during the predetermined period, in a case where an operation amount of a first manipulated variable among the manipulated variables is changed in step during the predetermined period and the operation amounts of the other manipulated variables among the manipulated variables are constant for the predetermined period;
   a second response calculating step of calculating second responses that are responses of the control variables during the predetermined period, in a case where an operation amount of a second manipulated variable other than the first manipulated variable among the manipulated variables is changed in step simultaneously with the operation amount of the first manipulated variable during the predetermined period; and
   an operation amount determining step of determining the operation amounts of the manipulated variables such that the control amounts of the control variables become predetermined target values based on the free responses, the first responses, and the second responses.

2. The method of controlling a process according to claim 1, wherein the second manipulated variable is a manipulated variable an operation amount of which is able to be determined such that a control amount of a specific control variable among the control variables is not changed in a case where the second manipulated variable is changed in step simultaneously with the operation amount of the first manipulated variable.

3. The method of controlling a process according to claim 1 or 2, wherein the operation amount determining step includes:

   a step of calculating future transitions of the control amounts of the control variables in a case where an operation of linear sum of the change amount in the operation amounts at the first response calculating step and the change amount in the operation amounts at the second response calculating step is performed; and
   a step of calculating weights of operation amounts of the manipulated variables that minimize deviation between the calculated future transitions of the control amounts of the control variables and the predetermined target values, and calculating operation amounts of the manipulated variables based on the calculated weights.

4. The method of controlling a process according to any one of claims 1 to 3, wherein the free response calculating step, the first response calculating step, the second response calculating step, and the operation amount determining step are repeatedly executed.

5. The method of controlling a process according to any one of claims 1 to 4, wherein

   the process is a blast furnace process,
   the manipulated variables include at least one of a coke ratio, a blast volume, an enrichment oxygen flow rate, a blast temperature, a pulverized coal flow rate, a blast moisture, and a furnace top pressure, and
the control variables are a hot metal temperature and a pig iron producing speed.

6. An operation guidance method, comprising a step of assisting blast furnace operation by presenting operation amounts of manipulated variables determined by the method of controlling a process according to claim 5.

7. A method of operating a blast furnace, comprising a step of controlling the blast furnace in accordance with operation amounts of manipulated variables determined by the method of controlling a process according to claim 5.

8. A method of producing hot metal, comprising a step of producing hot metal by controlling a blast furnace in accordance with operation amounts of manipulated variables determined by the method of controlling a process according to claim 5.

9. A control apparatus (100) of a process including a plurality of manipulated variables and a plurality of control variables controlled by the manipulated variables, control amounts of the control variables being determined by mutual interference of operation amounts of the manipulated variables, the control apparatus (100) comprising:

a free response calculating unit (113) configured to calculate free responses that are responses of the control variables during a predetermined period from a current time in a case where the operation amounts of manipulated variables are constant for the predetermined period;
a first response calculating unit (113) configured to calculate first responses that are responses of the control variables during the predetermined period, in a case where an operation amount of a first manipulated variable among the manipulated variables is changed in step during the predetermined period and the operation amounts of the other manipulated variables among the manipulated variables are constant for the predetermined period;
a second response calculating unit (113) configured to calculate second responses that are responses of the control variables during the predetermined period, in a case where an operation amount of a second manipulated variable other than the first manipulated variable among the manipulated variables is changed in step simultaneously with the operation amount of the first manipulated variable during the predetermined period; and
an operation amount determining unit (113) configured to determine the operation amounts of the manipulated variables such that the control amounts of the control variables become predetermined target values based on the free responses, the first responses, and the second responses.

**Patentansprüche**

1. Verfahren zur Steuerung eines Prozesses, der eine Vielzahl von manipulierten Variablen und eine Vielzahl von Steuervariablen, die durch die manipulierten Variablen gesteuert werden, beinhaltet, wobei die Steuergrößen der Steuervariablen durch gegenseitige Beeinflussung von Betriebsgrößen der manipulierten Variablen bestimmt werden, das Verfahren umfassend:

einen Freiantwort-Berechnungsschritt zum Berechnen freier Antworten, die Antworten der Steuervariablen während einer vorbestimmten Periode von einer aktuellen Zeit in einem Fall sind, in dem die Betriebsgrößen der manipulierten Variablen über die vorbestimmte Periode konstant sind;
einen ersten Antwortberechnungsschritt zum Berechnen erster Antworten, die Antworten der Steuervariablen während der vorbestimmten Periode in einem Fall sind, in dem eine Betriebsgröße einer ersten manipulierten Variablen von den manipulierten Variablen schrittweise während der vorbestimmten Periode geändert wird und die Betriebsgrößen der anderen manipulierten Variablen von den manipulierten Variablen über die vorbestimmte Periode konstant sind;
einen zweiten Antwortberechnungsschritt zum Berechnen von zweiten Antworten, die Antworten der Steuervariablen während der vorbestimmten Periode in einem Fall sind, in dem eine Betriebsgröße einer zweiten manipulierten Variablen, die sich von der ersten manipulierten Variablen unterscheidet, von den manipulierten Variablen in einem Schritt gleichzeitig mit der Betriebsgröße der ersten manipulierten Variablen während der vorbestimmten Periode geändert wird; und
einen Betriebsgrößenbestimmungsschritt zum Bestimmen der Betriebsgrößen der manipulierten Variablen, sodass die Steuergrößen der Steuervariablen basierend auf den freien Antworten, der ersten Antworten und der zweiten Antworten vorbestimmte Zielwerte werden.

2. Verfahren zum Steuern eines Prozesses gemäß Anspruch 1, wobei die zweite manipulierte Variable eine manipulierte Variable ist, von der es möglich ist, eine Betriebsgröße zu bestimmen, sodass eine Steuergröße einer spezifischen Steuervariablen von den Steuervariablen in einem Fall nicht verändert wird, wenn die zweite manipulierte Variable im Schritt gleichzeitig mit der Betriebsgröße der ersten manipulierte Variablen verändert wird.

3. Verfahren zum Steuern eines Prozesses gemäß Anspruch 1 oder 2, wobei der Betriebsgrößenbestimmungsschritt Folgendes beinhaltet:

einen Schritt eines Berechnens zukünftiger Übergänge der Steuergrößen der Steuervariablen in einem Fall, in dem eine Operation der linearen Summe der Änderungsgröße in den Operationsgrößen bei dem ersten Antwortberechnungsschritt und
der Änderungsgröße in den Operationsgrößen bei dem zweiten Reaktionsberechnungsschritt durchgeführt wird; und
einen Schritt eines Berechnens von Gewichten von Betriebsgrößen der manipulierten Variablen, die eine Abweichung zwischen den berechneten zukünftigen Übergängen der Steuergrößen der Steuervariablen und den vorbestimmten Zielwerten minimieren, und eines Berechnens von Betriebsgrößen der manipulierten Variablen basierend auf den berechneten Gewichten.

4. Verfahren zum Steuern eines Prozesses gemäß einem der Ansprüche 1 bis 3, wobei der Freiantwort-Berechnungsschritt, der erste Antwortberechnungsschritt, der zweite Antwortberechnungsschritt und der Betriebsgrößen-Berechnungsschritt wiederholt ausgeführt werden.

5. Verfahren zum Steuern eines Prozesses gemäß einem der Ansprüche 1 bis 4, wobei der Prozess ein Hochofenprozess ist,

die manipulierten Variablen mindestens eines von einem Koksverhältnis, einem Blasvolumen, einer Durchflussrate für angereicherten Sauerstoff, einer Blastemperatur, einer Durchflussrate für pulverisierte Kohle, einer Blasfeuchtigkeit und einem Ofenoberdruck beinhalten, und
die Steuervariablen eine Flüssigroheisentemperatur und Roheisen-Herstellungsgeschwindigkeit sind.

6. Betriebsanleitungsverfahren, umfassend einen Schritt eines Unterstützens eines Hochofenbetriebs durch Darstellen von Betriebsgrößen von manipulierten Variablen, die durch das Verfahren zum Steuern eines Prozesses gemäß Anspruch 5 bestimmt werden.

7. Betriebsverfahren eines Hochofens, umfassend einen Schritt zum Steuern des Hochofens gemäß Betriebsgrößen von manipulierten Variablen, die durch das Verfahren zum Steuern eines Prozesses gemäß Anspruch 5 bestimmt werden.

8. Flüssigroheisen-Herstellungsverfahren, umfassend einen Schritt zur Flüssigroheisen-Herstellung durch Steuern eines Hochofens gemäß Betriebsgrößen von manipulierten Variablen, die durch das Verfahren zum Steuern eines Prozesses gemäß Anspruch 5 bestimmt werden.

9. Steuervorrichtung (100) eines Prozesses, der eine Vielzahl von manipulierten Variablen und eine Vielzahl von Steuervariablen, die durch die manipulierten Variablen gesteuert werden, beinhaltet, wobei die Steuergrößen der Steuervariablen durch gegenseitige Beeinflussung von Betriebsgrößen der manipulierten Variablen bestimmt werden, die Steuervorrichtung (100) umfassend:

eine Berechnungseinheit freier Antworten (113), die zum Berechnen freier Antworten konfiguriert ist, die Antworten der Steuervariablen während einer vorbestimmten Periode von einer aktuellen Zeit in einem Fall sind, in dem die Betriebsgrößen der manipulierten Variablen über die vorbestimmte Periode konstant sind;
eine Berechnungseinheit erster Antworten (113), die zum Berechnen erster Antworten konfiguriert ist, die Antworten der Steuervariablen während der vorbestimmten Periode in einem Fall sind, in dem eine Betriebsgröße einer ersten manipulierten Variablen von den manipulierten Variablen schrittweise während der vorbestimmten Periode geändert wird und die Betriebsgrößen der anderen manipulierten Variablen von den manipulierten Variablen über die vorbestimmte Periode konstant sind;
eine Berechnungseinheit zweiter Antworten (113), die zum Berechnen zweiter Antworten konfiguriert ist, die Antworten der Steuervariablen während der vorbestimmten Periode in einem Fall sind, in dem eine Betriebsgröße einer zweiten manipulierten Variablen, die sich von der ersten manipulierten Variablen unterscheidet, von den manipulierten Variablen in einem Schritt gleichzeitig mit der Betriebsgröße der ersten manipulierten Variablen während der vorbestimmten Periode geändert wird; und
eine Betriebsgrößenbestimmungseinheit (113), die zum Bestimmen der Betriebsgrößen der manipulierten Variablen konfiguriert ist, sodass die Steuergrößen der Steuervariablen basierend auf den freien Antworten, der ersten Antworten und der zweiten Antworten vorbestimmte Zielwerte werden.

**Revendications**

1. Un procédé de contrôle d'un processus comprenant une pluralité de variables manipulées et une pluralité de variables de contrôle contrôlées par les variables manipulées, les quantités de contrôle des variables de contrôle étant déterminées par l'interférence mutuelle des quantités de fonctionnement des variables manipulées, le procédé comprenant :

   une étape de calcul de la réponse libre consistant à calculer les réponses libres qui sont des réponses des variables de contrôle pendant une période prédéterminée à partir d'un moment actuel dans le cas où les quantités de fonctionnement des variables manipulées sont constantes pendant la période prédéterminée ;
   une étape de calcul de la première réponse consistant à calculer les premières réponses qui sont des réponses des variables de contrôle pendant la période prédéterminée, dans le cas où une quantité de fonctionnement d'une première variable manipulée parmi les variables manipulées est modifiée par étapes pendant la période prédéterminée et où les quantités de fonctionnement des autres variables manipulées parmi les variables manipulées sont constantes pendant la période prédéterminée ;
   une étape de calcul de la deuxième réponse consistant à calculer les deuxièmes réponses qui sont des réponses des variables de contrôle pendant la période prédéterminée, dans le cas où une quantité de fonctionnement d'une deuxième variable manipulée autre que la première variable manipulée parmi les variables manipulées est modifiée par étapes simultanément à la quantité de fonctionnement de la première variable manipulée pendant la période prédéterminée ; et
   une étape de détermination de la quantité de fonctionnement consistant à déterminer les quantités de fonctionnement des variables manipulées de sorte que les quantités de contrôle des variables de contrôle deviennent des valeurs cibles prédéterminées sur la base des réponses libres, des premières réponses et des deuxièmes réponses.

2. Le procédé de contrôle d'un processus selon la revendication 1, dans lequel la deuxième variable manipulée est une variable manipulée dont la quantité de fonctionnement peut être déterminée de manière à ce que la quantité de contrôle d'une variable de contrôle spécifique parmi les variables de contrôle ne soit pas modifiée dans le cas où la deuxième variable manipulée est modifiée par étapes simultanément à la quantité de fonctionnement de la première variable manipulée.

3. Le procédé de contrôle d'un processus selon la revendication 1 ou 2, dans lequel l'étape de détermination de la quantité de fonctionnement comprend :

   une étape de calcul des transitions futures des quantités de contrôle des variables de contrôle dans le cas où une opération de somme linéaire de la quantité de changement dans les quantités de fonctionnement à l'étape de calcul de la première réponse et de la quantité de changement dans les quantités de fonctionnement à l'étape de calcul de la deuxième réponse est effectuée ; et
   une étape de calcul des poids des quantités de fonctionnement des variables manipulées qui minimisent l'écart entre les transitions futures calculées des quantités de contrôle des variables de contrôle et les valeurs cibles prédéterminées, et le calcul des quantités de fonctionnement des variables manipulées sur la base des poids calculés.

4. Le procédé de contrôle d'un processus selon l'une quelconque des revendications 1 à 3, dans lequel l'étape de calcul de la réponse libre, l'étape de calcul de la première réponse, l'étape de calcul de la deuxième réponse et l'étape de détermination de la quantité de fonctionnement sont exécutées de manière répétée.

5. Le procédé de contrôle d'un processus selon l'une quelconque des revendications 1 à 4, dans lequel

   le processus est un processus de haut fourneau,
   les variables manipulées comprennent au moins l'un des éléments suivants : un rapport de coke, un volume de soufflage, un débit d'oxygène d'enrichissement, une température de soufflage, un débit de charbon pulvérisé, une humidité de soufflage et une pression supérieure du four, et
les variables de contrôle sont la température du métal chaud et la vitesse de production de la fonte brute.

**6.** Un procédé de guidage de fonctionnement, comprenant une étape d'assistance au fonctionnement du haut fourneau en présentant les quantités de fonctionnement des variables manipulées déterminées par le procédé de contrôle d'un processus selon la revendication 5.

**7.** Un procédé de fonctionnement d'un haut fourneau, comprenant une étape de contrôle du haut fourneau en fonction des quantités de fonctionnement des variables manipulées déterminées par le procédé de contrôle d'un processus selon la revendication 5.

**8.** Un procédé de production de métal chaud, comprenant une étape de production de métal chaud en contrôlant un haut fourneau en fonction des quantités de fonctionnement des variables manipulées déterminées par le procédé de contrôle d'un processus selon la revendication 5.

**9.** Un appareil de contrôle (100) d'un processus comprenant une pluralité de variables manipulées et une pluralité de variables de contrôle contrôlées par les variables manipulées, les quantités de contrôle des variables de contrôle étant déterminées par l'interférence mutuelle des quantités de fonctionnement des variables manipulées, l'appareil de contrôle (100) comprenant :

une unité de calcul des réponses libres (113) configurée pour calculer les réponses libres qui sont des réponses des variables de contrôle pendant une période prédéterminée à partir d'un moment actuel dans le cas où les quantités de fonctionnement des variables manipulées sont constantes pendant la période prédéterminée ;
une unité de calcul de la première réponse (113) configurée pour calculer les premières réponses qui sont des réponses des variables de contrôle pendant la période prédéterminée, dans le cas où une quantité de fonctionnement d'une première variable manipulée parmi les variables manipulées est modifiée par étapes pendant la période prédéterminée et où les quantités de fonctionnement des autres variables manipulées parmi les variables manipulées sont constantes pendant la période prédéterminée ;
une unité de calcul de la deuxième réponse (113) configurée pour calculer les deuxièmes réponses qui sont des réponses des variables de contrôle pendant la période prédéterminée, dans le cas où une quantité de fonctionnement d'une deuxième variable manipulée autre que la première variable manipulée parmi les variables manipulées est modifiée par étapes simultanément à la quantité de fonctionnement de la première variable manipulée pendant la période prédéterminée ; et
une unité de détermination de la quantité de fonctionnement (113) configurée pour déterminer les quantités de fonctionnement des variables manipulées de sorte que les quantités de contrôle des variables de contrôle deviennent des valeurs cibles prédéterminées sur la base des réponses libres, des premières réponses et des deuxièmes réponses.

14

# FIG.1

100

101

## INFORMATION PROCESSING DEVICE

113

111

RAM

112

ROM

CPU

112a

CONTROL
PROGRAM

102

103

INPUT DEVICE

OUTPUT DEVICE

# FIG.2

INPUT VARIABLE:
·COKE RATIO
·BLAST VOLUME
·ENRICHMENT
OXYGEN FLOW RATE
·BLAST TEMPERATURE
·PULVERIZED
COAL FLOW RATE
·BLAST MOISTURE
·FURNACE TOP
PRESSURE

PHYSICAL
MODEL

OUTPUT VARIABLE:
·GAS UTILIZATION RATIO ($\eta$ CO)
·TEMPERATURE OF COKE AND
IRON
·OXIDATION DEGREE OF
IRON ORE
·DESCENDING VELOCITY OF
RAW MATERIALS
·SOLUTION-LOSS CARBON
AMOUNT
·HOT METAL TEMPERATURE
·PIG IRON PRODUCING SPEED
·FURNACE BODY HEAT LOSS

# FIG.3

——— : FREE RESPONSE $y_0$

– – – – : RESPONSE $y_1$

(a) HOT METAL TEMPERATURE HMT [°C]

TARGET VALUE

(b) PIG IRON PRODUCING SPEED Prod [t/min]

TARGET VALUE

TIME [hr]

# FIG.4

——— : FREE RESPONSE $y_0$

- - - - : RESPONSE $y_1$

(a) PULVERIZED
COAL AMOUNT
PCI/BV [kg/Nm$^3$]

(b) BLAST
VOLUME
BV [Nm$^3$/min]

(c) PULVERIZED
COAL FLOW RATE
PCI [kg/min]

(d) ENRICHMENT
OXYGEN FLOW RATE
BVO [Nm$^3$/min]

TIME [hr]

# FIG.5

(a) STEP
RESPONSE
(HOT METAL
TEMPERATURE)
$\Delta$ HMT [$^{\circ}$C]

(b) STEP
RESPONSE
(PIG IRON
PRODUCING
SPEED)
$\Delta$ Prod [t/min]

TIME [hr]

# FIG.6

────── : FREE RESPONSE $y_0$

- - - - - : RESPONSE $y_2$

(a) HOT METAL TEMPERATURE HMT [°C]

TARGET VALUE

(b) PIG IRON PRODUCING SPEED Prod [t/min]

TARGET VALUE

TIME [hr]

# FIG.7

——— : FREE RESPONSE $y_0$

- - - - : RESPONSE $y_2$

(a) PULVERIZED COAL AMOUNT PCI/BV [kg/Nm$^3$]

(b) BLAST VOLUME BV [Nm$^3$/min]

(c) PULVERIZED COAL FLOW RATE PCI [kg/min]

(d) ENRICHMENT OXYGEN FLOW RATE BVO [Nm$^3$/min]

TIME [hr]

# FIG.8

(a) STEP RESPONSE (HOT METAL TEMPERATURE) $\Delta$ HMT [$^{\circ}$C]

(b) STEP RESPONSE (PIG IRON PRODUCING SPEED) $\Delta$ Prod [t/min]

TIME [hr]

# FIG.9

—— : CALCULATED VALUE (WITH ACTION)

- - - - : CALCULATED VALUE (WITHOUT ACTION)

(a) BLAST VOLUME BV [Nm³/min]

(b) ENRICHMENT OXYGEN FLOW RATE BVO [Nm³/min]

(c) PULVERIZED COAL FLOW RATE PCI [kg/min]

(d) BLAST MOISTURE BV [g/Nm³]

(e) BLAST TEMPERATURE BT [°C]

(f) COKE RATIO CR [kg/t]

TIME [hr]

# FIG.10

—  — : ACTUAL VALUE

———— : CALCULATED VALUE (WITH ACTION)

- - - - : CALCULATED VALUE (WITHOUT ACTION)

(a) HOT METAL TEMPERATURE HMT [°C]

TARGET VALUE

(b) PIG IRON PRODUCING SPEED Prod [t/min]

TARGET VALUE

TIME [hr]

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11335710 A
- US 20050154477 A1
- US 20080195235 A1

**Non-patent literature cited in the description**

- **MICHIHARU HATANO et al.** Investigation of Blow-in Operation through the Blast Furnace Dynamic Model. *Tetsu-to-Hagane,* vol. 68, 2369